# EUROPÄISCHE PATENTSCHRIFT

(11) **EP 1 660 295 B1**
(45) Veröffentlichungstag und Bekanntmachung des Hinweises auf die Patenterteilung: **29.10.2008**
(21) Anmeldenummer: 04764073.5
(22) Anmeldetag: 13.08.2004
(51) Int. Cl.: B29C 45/73, B29C 45/27, B29C 47/78, H05B 3/14

(54) **HEIZBARES WERKZEUG**
HEATABLE TOOL
OUTIL CHAUFFABLE

(30) Priorität: 16.08.2003 DE 10337685
(43) Veröffentlichungstag der Anmeldung: 31.05.2006
(60) Teilanmeldung: 06121136.3
(73) Patentinhaber: KraussMaffei Technologies GmbH, 80997 München (DE)
(72) Erfinder: BURR, August, 74626 Bretzfeld (DE); MÜLLER, Andreas, 74389 Cleebronn (DE); HETSCHEL, Martin, 74363 Güglingen (DE); BÜRKLE, Erwin, 83671 Benediktbeuern (DE)
(74) Vertreter: Zollner, Richard
(86) Internationale Anmeldenummer: PCT/EP2004/009076
(87) Internationale Veröffentlichungsnummer: WO 2005/018908

(56) Entgegenhaltungen:
- EP-A- 0 296 562
- EP-A- 0 312 029
- DE-A- 3 712 128
- DE-A1- 4 325 606
- DE-A1- 10 136 678
- DE-A1- 19 607 560
- DE-C- 3 343 822
- DE-U1- 9 422 163
- DE-U1- 29 623 184
- PATENT ABSTRACTS OF JAPAN Bd. 005, Nr. 014 (M-052), 28. Januar 1981 (1981-01-28) -& JP 55 144136 A (TOYODA GOSEI CO LTD), 10. November 1980 (1980-11-10)
- PATENT ABSTRACTS OF JAPAN Bd. 0130, Nr. 90 (M-803), 2. März 1989 (1989-03-02) & JP 63 283921 A (SHOWA DENKO KK), 21. November 1988 (1988-11-21)
- PATENT ABSTRACTS OF JAPAN Bd. 0123, Nr. 02 (M-732), 17. August 1988 (1988-08-17) & JP 63 078720 A (SEKISUI CHEM CO LTD), 8. April 1988 (1988-04-08)
- PATENT ABSTRACTS OF JAPAN Bd. 015, Nr. 362 (M-1157), 12. September 1991 (1991-09-12) & JP 03 142203 A (NIPPON CARBIDE IND CO INC), 18. Juni 1991 (1991-06-18)
- PATENT ABSTRACTS OF JAPAN Bd. 2000, Nr. 11, 3. Januar 2001 (2001-01-03) & JP 2000 218671 A (KYOCERA CORP), 8. August 2000 (2000-08-08)
- PATENT ABSTRACTS OF JAPAN Bd. 013, Nr. 512 (M-893), 16. November 1989 (1989-11-16) -& JP 01 205858 A (DAIDO STEEL CO LTD), 18. August 1989 (1989-08-18)
- "CERAMIC MOLDS: EPOXY ECONOMY WITH HIGH HEAT RESISTANCE" MODERN PLASTICS INTERNATIONAL, MCGRAW-HILL,INC. LAUSANNE, CH, Bd. 21, Nr. 8, 1. August 1991 (1991-08-01), Seite 22, XP000231920 ISSN: 0026-8283

## Beschreibung

Die Erfindung betrifft ein heizbares Werkzeug gemäß dem Oberbegriff des Anspruchs 1.

Werkzeuge sind in der kunststoff- und metallverarbeitenden Industrie zur Formgebung oder Weiterleitung der Schmelze bekannt. Eine Kunststoffschmelze umfasst sowohl eine reine Kunststoffschmelze wie auch eine Schmelze mit einem bestimmten Füllstoffanteil, z.B. Glasfaser, Keramikpulver, Metallpulver oder andere bekannte Füllstoffe. Der Füllstoffanteil kann dabei Werte von 90 % und mehr erreichen.

Beispielsweise werden Formwerkzeuge bei Extrudern, PUR-Schäummaschinen, Duroplast- und Thermoplast-Spritzgießmaschinen oder bei Druckgussmaschinen zur formgebenden Gestaltung eines Produktes verwendet.

In der Regel besteht ein Formwerkzeug zur Ausbildung einer Formkavität aus zwei Werkzeughälften oder -formteilen, die derart ausgestaltet sind, dass bei deren Zusammenfügen ein dem fertigen Produkt entsprechender Hohlraum entsteht, in den das zu verarbeitende Material, beispielsweise eine Kunststoffschmelze, eingeführt - zum Beispiel eingespritzt - werden kann.

Der vorliegend verwendete Begriff Werkzeug ist jedoch breit auszulegen und betrifft nicht nur formgebende Werkzeuge für das Spritzgießen und Extrudieren. Er umfasst vielmehr auch Heißkanäle und Wärmeleitdüsen sowie andere Einrichtungen, die zur Temperierung und Führung der Schmelze nach ihrer Herstellung sowie zur Verkürzung oder Beseitigung von Kaltkanälen dienen können.

Als Anwendungsbeispiel für ein beheizbares Werkzeug ist ein Formwerkzeug für eine Spritzgießmaschine zu nennen. Bei der Verarbeitung der in eine Kavität einzubringenden Schmelze oder des darin einzubringenden Produktmaterials ist es meist wichtig, dass die Kavitätsoberflächen auf eine bestimmte, auf das Material abgestimmte Temperatur gebracht werden können. Oftmals ist es auch während des Produktionsvorgangs innerhalb eines Zykluses erforderlich, die Temperatur der Kavitätsoberfläche zu verändern. Beispielsweise kann es erforderlich sein, die Temperatur während eines Einspritzvorganges selbst relativ hoch zu halten, danach die Temperatur jedoch signifikant abzusenken, um eine schnelle Erstarrung der Schmelze zu gewährleisten. Allgemein hat die Temperatur in der Kavität und der Kavitätsoberfläche dabei auch großen Einfluss auf die Qualität und Güte des herzustellenden Produktes (optische Produkte, wie optische Datenträger oder Linsen).

Um unter solchen Bedingungen schnelle Zykluszeiten und damit eine hohe Produktivität sicherzustellen, ist eine schnelle Aufheizung der Formwerkzeuge erforderlich.

Es sind jedoch auch noch weitere Anwendungsgebiete denkbar, bei denen Schmelzetemperierungen oder -heizungen notwendig sind. So könnte sich bei Kaltkanälen der Zustand der Schmelze in qualitätsvermindemder Weise ändern. Ändert sich aufgrund der Abkühlung die Viskosität, so kann es auch zu Schwierigkeiten bei der Verarbeitung der Schmelze kommen.

Aber auch bei formgebenden Düsenwerkzeugen, beispielsweise am ausgangsseitigen Ende von Extrudern, ist eine optimale Temperierung oftmals gewünscht und evtl. auch erforderlich.

Bisher sind zum Beheizen von Werkzeugen und Formen Wiederstandsheizungen beispielsweise auf Basis eines Wiederstandsdrahtes bekannt. Diese Wiederstandsheizungen können mittels elektrischer Energie betrieben werden, und die Heizelemente lassen sich auch an die Geometrien der Kavität bzw. der Kavitätsoberflächen anpassen. Zudem ist die Bereitstellung einer unterschiedlichen Heizleistung ohne weiteres möglich.

Weitere Möglichkeiten für das Beheizen von Formwerkzeugen sind mit sogenannten Dickschichtheizelementen gegeben, die hauptsächlich im Bereich der Heißkanaltechnik eingesetzt werden.

Problematisch bei der Verwendung von Heizpatronen ist die mangelnde Anpassungsfähigkeit an die Kontur einer zu beheizenden Fläche. Überdies sind die langen Reaktionszeiten beim Ändern des Temperaturniveaus nachteilig. Ein solches Heizelement kann in der Regel auch nicht mechanisch belastet werden, so dass eine zumindest geringfügige Beabstandung von der Oberfläche erforderlich ist, was zu einer Minderung der Heizleistung führt. Auch sind die Leistungskapazitäten begrenzt. So bewegt sich die flächenbezogene Heizleistung bei Dickschichtheizungen im Bereich von ca. 5,5 W/cm² und für Heizpatronen im Bereich von ca. 10 W/cm². Auch die begrenzte Lebensdauer der bekannten Heizelemente ist nachteilig.

Es sind auch andere Heizmöglichkeiten bekannt. So ist in der DE 37 12 128 ein Formeinsatz aus technischer Keramik für Gieß- und Spritzgießwerkzeuge beschrieben, der aus einer elektrisch leitenden Keramik oder einer Metallkeramik auf Nitrid- und/oder Carbidbasis besteht. Ein solcher Formeinsatz eignet sich insbesondere für die Herstellung von Kunststoffteilen mit optischer Oberflächenqualität.

In der DE 199 42 364 ist ein Werkzeug zum Warmumformen beim Prägeformprozess angegeben, wobei direkt unter einem Abformwerkzeug ein Formkörper aus elektrisch leitfähiger und dadurch direkt beheizbarer Keramik in wärmeleitendem Kontakt zu diesem angebracht ist. Der Formkörper ist gegenüber der Umformmaschine durch eine Isolationsplatte thermisch und elektrisch isoliert.

In der WO 00/54949 ist ein beheizbares Werkzeug beschrieben, bei dem die Heizung durch Kohlenstofffasem realisiert ist, welche in eine Keramik eingelegt sind.

Im Abstract der JP 63283921 ist ein Spritzgießwerkzeug beschrieben, bei dem in einem gesinterten Keramikkörper, der teilweise auch die Kavitätsoberfläche bildet, ein Kanal in Form einer spiralförmigen Nut eingearbeitet ist, durch den ein Kühlfluid hindurchgeleitet werden kann. Eine zusätzliche Heizung, zusätzlich zum Kühlfluiddurchfluss ist in diesem Dokument nicht angesprochen.

Aufgabe der vorliegenden Erfindung ist es, ein beheizbares Werkzeug wie in der DE 37 12 128 angegeben weiterzubilden, bei dem insbesondere eine schnelle Austauschbarkeit eines Temperiereinsatzes gewährleistet ist.

Diese Aufgabe wird durch die im Anspruch 1 angegebenen Merkmalen gelöst.

Dabei liegt ein wesentlicher Gedanke in der Verwendung einer elektrisch leitfähigen Keramik als Heizelement - anstelle eines üblicherweise benutzten Widerstandsdrahtes oder eines Dickschichtheizelementes. Eine elektrisch leitfähige Keramik lässt sich vorzugsweise mit Niederspannung sowie einem relativ hohen Strom beaufschlagen, so dass innerhalb kürzester Zeit hohe Temperaturen erreicht werden können. Aufgrund der Niederspannung sind auch keine besonderen Sicherheitsvorschriften zu beachten. Überdies lässt sich eine solche Keramik auch mit einem einfachen Regelnetzteil ansteuern.

Als Keramikbasisverbindung eignet sich eine Silizium-Nitrid-Keramik, die an sich nicht leitend ist, jedoch eine günstige Basis darstellt. Dieser Basiskeramikverbindung kann dann eine Zugabe beigemischt sein, welche die Leitfähigkeit herstellt. Beispielsweise kann dies eine Titan-Nitrid-Verbindung sein, die an sich relativ teuer ist. Die Zumischung wird im Bereich von 10 % bis 50 %, insbesondere 20 % bis 40 % gewählt. In Ausnahmefällen kann der Zugabeanteil auch sehr viel höher, insbesondere bis zu 100 % gewählt werden.

Gemäß der Erfindung sind in der elektrisch leitenden Keramik Kühlkanäle zur Durchleitung eines Kühlmediums eingearbeitet. Dies ist hilfreich, um eine Temperaturregelung in besonders guter Weise zu gewährleisten, insbesondere nicht nur eine schnelle Erhitzung des Formwerkzeugs sondern auch eine schnelle Abkühlung sicherzustellen. Diese Kühlkanäle lassen sich beispielsweise durch Erodierung ausbilden. Bei einer Durchleitung eines Kühlmediums (gasförmig, flüssig) lässt sich die Temperatur in der Keramik und damit auch im Formwerkzeug selbst in einer erforderlichen Weise einstellen. Insgesamt sind damit Heiz- und Kühlmöglichkeiten in gleicher Weise gegeben.

Weiter ist es möglich, die elektrisch leitende Keramik als Einsatz zum Einfügen in eine Werkzeug-Basisstruktur auszubilden. Um eine elektrische Isolierung gegenüber anderen Bauteilen und/oder gegenüber der Schmelze zu erreichen, kann die elektrisch leitende Keramik zumindest teilweise oxidiert ausgeführt sein. Die so aufgebrachte Oxidschicht dient dabei als Isolation.

Weiterhin ist die Möglichkeit der Ausbildung einer Struktur, insbesondere einer Nanostruktur, auf einer Oberfläche der elektrisch leitenden Keramik gegeben, insbesondere, wenn diese in einem Formwerkzeug mit der Kunststoffschmelze in Kontakt kommt. In diesem Fall wird die Nanostruktur bei der Produktherstellung übertragen und auf der Oberfläche des Produktes abgebildet. Ein solches Verfahren kann beispielsweise zur Ausbildung von Informationen wie bei optischen Datenträgern (CD, DVD etc.) dienen oder aber zur Erreichung bestimmter (z.B. physikalischer) Effekte bei einem Produkt, wie eine Entspiegelung einer Linse oder der Veränderung der Lichttransmission bei einem optischen Produkten. Natürlich können alle Arten von Oberflächenstrukturen durch eine entsprechende Gestaltung der Oberfläche der elektrisch leitenden Keramik gebildet werden. Die Ausbildung der Oberflächenstruktur ist beispielsweise durch einen Material-Abscheideprozess möglich.

Die elektrisch leitende Keramik kann sandwichartig im Formwerkzeug, beispielsweise zwischen zwei Teilen des Werkzeugs, aufgenommen sein. Dabei ist es jedoch sinnvoll, die elektrisch leitende Keramik möglichst nahe unterhalb der Kavitätsoberfläche anzuordnen, so dass die Wärme auch am gewünschten Ort erzeugbar ist.

Da sich für eine solche elektrisch leitende Keramik auch ein Material mit guter mechanischer Eigenschaft (zum Beispiel hoher Druckfestigkeit) auswählen lässt, kann die Keramik nicht nur unmittelbar unterhalb einer Oberfläche eingesetzt werden, die mit der Schmelze in Kontakt (z.B. Kavitätsoberfläche oder Schmelzekanal) kommt, sondern die elektrisch leitende Keramik kann selbst mit einer solchen Oberfläche ausgestaltet werden. Dazu sollte jedoch ein hochabriebfestes Material für die elektrisch leitende Keramik ausgewählt werden.

Bei einer besonders bevorzugten Ausführungsform der Erfindung ist die elektrisch leitfähige Keramik mit dem Werkzeug bzw. mit einem anderen Element des Werkzeugs stoffschlüssig verbunden. Dies kann beispielsweise durch Diffusionsschweißen erreicht werden. In diesem Fall ist die elektrische Keramik nicht nur in das Werkzeug integriert sondern als Teil davon ausgebildet.

Bei der Erfindung wird die elektrisch leitfähige Keramik als Werkzeugeinbausatz ausgeführt, welcher in die Ausnehmung eines Werkzeugträgers einsetzbar oder auf einen Werkzeugträger aufsetzbar ist. Werden dabei dimensionsmäßig standardisierte Werkzeugträger mit entsprechenden Ausnehmungen und/oder Halterungen verwendet, so können die einzelnen elektrisch leitenden und damit elektrisch beheizbaren Keramikformteile einfach gegeneinander ausgetauscht werden, um so verschieden Kavitäten bilden zu können. Werden auch die elektrischen Zuführungen entsprechend koppelbar mit der elektrisch leitenden Keramik ausgebildet, so können die einzelnen Keramikeinsätze nach einem Öffnen einer Schließeinheit einfach entnommen und gegen einen anderen Keramiksatz ausgetauscht werden. Entscheidend dabei ist natürlich, dass das Kavitätsmaß die Dimension des Keramikeinsatzes nicht überschreitet bzw. erreicht. Ein solch austauschbarer Keramikeinsatz wäre beispielweise bei der Herstellung von optischen Datenträgern wie CD's oder DVD's nützlich, für deren Herstellung Informationen anstelle des bislang bekannten Stampers auf die Kavitätsoberfläche der elektrisch leitfähigen Keramik eingearbeitet oder aufgebracht sind.

Um eine ausreichende Stabilität der Keramik zu gewährleisten, kann diese auch auf einem Trägerelement, beispielsweise einem normalen Werkzeugstahl angeordnet sein.

Vorzugsweise ist die elektrisch leitende Keramik in ihrer Form oder Oberfläche an die Geometrie der mit der Schmelze in Kontakt kommenden Oberfläche (z.B. der Kavitätsoberflächen oder der Heißkanäle) angepasst. Mit der elektrisch leitfähigen Keramik lässt sich die Temperaturverteilung über die zu beheizende Oberfläche gleichmäßig gestalten. Dies ist beispielsweise bei Kavitätsoberflächen notwendig, da die Temperierung der Kavitätsoberflächen Einfluss auf die Qualität des herzustellenden Produktes hat.

Die elektrische Versorgung der elektrisch leitenden Keramik lässt sich durch Aufbringen der Keramik auf eine oder mehrere elektrisch leitfähige Oberflächen erreichen. Durch ein Aufbringen der elektrisch leitenden Keramik auf eine oder mehrere elektrisch leitfähige Oberflächen müssen keine eigenen und separaten elektrischen Zu- bzw. Ableitungen vorgesehen werden. In diesem Fall ist es möglich, die Isolierung der elektrisch leitenden Keramik im Bereich der Kontaktierung wegzulassen.

In einer Alternative könnte ein keramisches Verbundsystem aus einer elektrisch leitenden und einer elektrisch nicht leitenden Keramik verwendet werden. In diesem Fall kann den Keramik-Gesamtverbund aus einer kostengünstigeren Keramik - wie beispielweise einer Silizium-Nitrid Verbindung - und einer kostenintensiveren elektrisch leitenden Keramik - beispielsweise einer mit Titan-Nitrid versetzten Silizium-Nitrid-Verbindung - bestehen. Die elektrisch leitende Keramik soll in manchen Fällen eine bestimmte Stärke/Dicke nicht überschreiten. Beispielsweise können Dicken im Bereich von 1 bis 4 mm gewünscht oder erforderlich sein. Dies kann teilweise auch vom geforderten elektrischen Widerstand abhängen. Bei einer solchen Dicke hätte die elektrisch leitende Keramik selbst nicht die gewünschte Stabilität, um als Formoberfläche für ein Werkzeug zu dienen. Um eine ausreichende Stabilität zu gewährleisten kann die Verbundkeramik dienen, wobei die gewünschte Stabilität durch die nicht leitende Keramik gewährleistet wird, die zur Gesamtverstärkung beiträgt. Gleichzeitig kann die nicht leitende Keramik zu Isolationszwecken dienen, wobei dann die elektrisch leitende Keramik in die elektrisch nicht leitende Keramik eingesetzt ist. Ein Vorteil des Keramikverbundes ist in den gleichen physikalischen Größen, wie Wärmeausdehnung, Druckfestigkeit etc. zu sehen. Die elektrisch nicht leitende Keramik des Verbundsystems kann aber auch zur Ausbildung einer Kühlschicht mit Kühlkanälen vorgesehen sein. Bei solche keramischen Verbundsystemen ist es vorteilhaft eine stoffschlüssige Verbindung zwischen diesen Keramiken vorzusehen.

Ein Ausführungsbeispiel der vorliegenden Erfindung wird nachfolgend und mit Bezug auf die beiliegenden Zeichnungen näher erläutert. Die beiliegenden Zeichnungen zeigen in
- Figur 1: eine schematische Teilschnittansicht eines Formwerkzeugs,
- Figur 2: eine schematische Teilschnittdarstellung einer zweiten Ausführungsform eines Formwerkzeugs und
- Figur 3: eine schematische Teilschnittansicht einer Ausführungsform eines erfindungsgemäßen Formwerkzeugs.

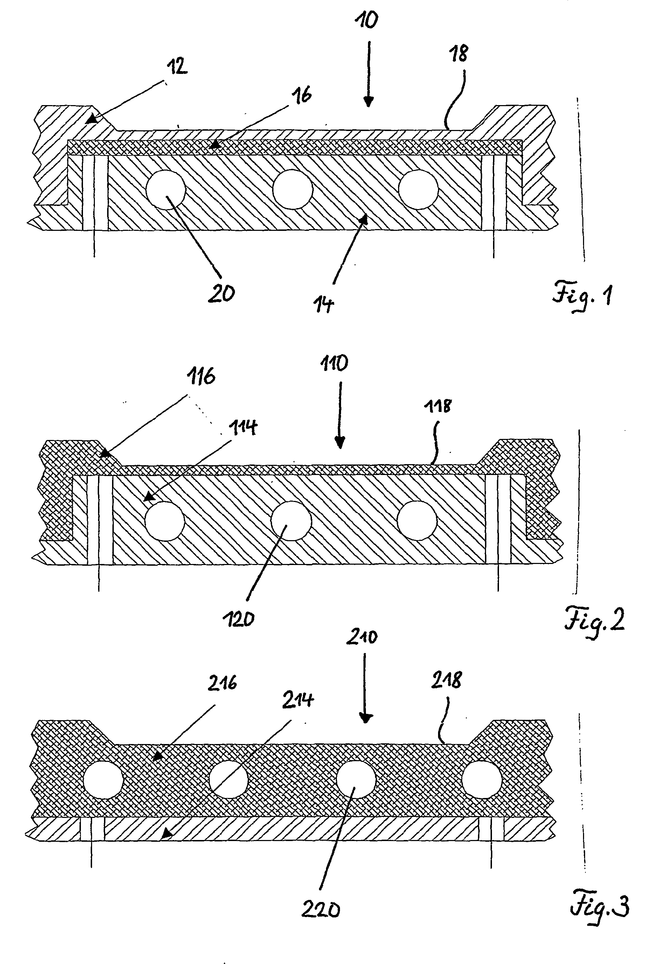

In den dargestellten Figuren 1 bis 3 sind jeweils nur ein Teil eines Formwerkzeugs in schematischer Schnittdarstellung abgebildet. Diese Abbildungen sind jedoch ausreichend zur Erläuterung der vorliegenden Erfindung anhand eines Formwerkzeuges für eine Spritzgießmaschine. Für ein funktionsfähiges Formwerkzeug müssen jedoch zumindest zwei solcher Formwerkzeugteile zur Ausbildung einer mit Kunststoff- oder Metallschmelze füllbaren Kavität zusammengeführt werden. Wie eingangs erwähnt, umfasst der Begriff Kunststoffschmelze dabei auch Compoundschmelzen mit einem Füllstoffanteil. Dies ist jedoch aus dem Stand der Technik hinreichend bekannt und muss daher vorliegend nicht näher erläutert werden.

In Figur 1 ist ein Ausschnitt in Teilschnittansicht aus einem Teil eines Formwerkzeugs 10 dargestellt, wobei das Formwerkzeug an einer nicht näher dargestellten Aufspannplatte einer Schließeinheit einer Spritzgießmaschine montierbar ist.

Der Formwerkzeugteil 10 aus Figur 1 umfasst ein Basis- und Trägerelement 14 aus einem normalen Werkzeugstahl. Dieses erste Element besitzt Kühldurchflussöffnungen, durch die bei Bedarf ein Kühlmittel hindurchgeleitet werden kann. Die Kavitätsoberfläche wird durch ein weiteres Werkzeugelement 12 gebildet, an deren in Figur oben dargestellter Fläche eine Kavitätsfläche 18 ausgebildet ist. Dabei ist zwischen dem Werkzeugelement 12 sowie dem Basis- und Trägerelement 14 eine elektrisch leitfähige Keramik 16 angeordnet. Die elektrisch leitfähige Keramik 16 besteht aus einem druckfesten Material, welches beim Anlegen einer Niederspannung von einem hohem Strom durchflossen wird. Dies ermöglicht innerhalb kürzester Zeit eine sehr hohe Temperaturbildung in der Keramik. Durch die mechanische Druckfestigkeit ist es möglich, die Keramik 16 unmittelbar nahe der Kavitätsoberfläche 18 anzuordnen. Damit wird gewährleistet, dass die mit der Keramik 16 generierte Temperatur die Kavitätsoberfläche 18 schnell erreicht. Vorliegend ist die Kavitätsoberfläche 18 parallel zur Keramik 16 ausgebildet. Sollte die Kavitätsoberfläche 18 anders geformt sein, so könnte auch die Keramik 16 an die jeweilige Geometrie entsprechend angepasst werden.

Die elektrisch leitfähige Keramik 16 ist in nicht näher dargestellter Weise mit elektrischen elektrischen Kontaktierungen versehen, um einen Stromdurchfluss durch die Keramik zu erzeugen. Sichtbar in den Figuren 1 bis 3 sind lediglich die elektrischen Zuführungen. Ebenfalls nicht dargestellt ist der Anschluss der elektrisch leitfähigen Keramik an ein Regelnetzteil. Dieses Regelnetzteil kann einfach ausgebildet und separat angeordnet, aber auch in die Steuerung einer elektrischen Spritzgießmaschine integriert werden.

Die Ausführungsform gemäß Figur 2 unterscheidet sich von derjenigen in Figur 1 dadurch, dass das in Figur 1 die Kavitätsoberfläche bildende, aus Werkzeugstahl bestehende Element 12 weggelassen ist und die Keramik 116 nunmehr selbst mit der Kavitätsoberfläche 118 ausgebildet ist. Auch bei dieser Ausführungsform ist die elektrische leitfähige Keramik 116 auf einem Basis- und Trägerelement 114 angeordnet, wobei dieses Basis- und Trägerelement 114 wiederum von Kühlöffnungen durchzogen ist. Mit der unmittelbaren Ausbildung der Kavitätsoberfläche auf der Keramik selbst kann die Temperatur genau an Ort und Stelle generiert werden, an der sie auch benötigt wird. Dies führt zu einer besonders schnellen Aufheizung der Kavitätsoberfläche. In Kombination mit einem Durchströmen eines Kühlmediums durch die Kühlkanäle 120 kann auch ein relativ schnelles Abkühlen und damit eine gewünschte Temperaturregelung erreicht werden. Die elektrisch leitfähige Keramik 116 garantiert dabei auch eine sehr hohe flächenbezogene Heizleistung. Auf der Oberfläche 118 der elektrisch leitenden Keramik kann eine Struktur aufgebracht sein.

Wird die Keramik 116 selbst als Kavitätsoberfläche vorgesehen, so ist die Verwendung eines hochabriebfesten Keramikwerkstoffes sinnvoll. Überdies sollte dann die Oberfläche der Keramik 118 beispielsweise mittels einer Oxidschicht elektrisch isoliert werden. Durch die Verwendung einer Niederspannung für den Betrieb der elektrisch leitfähigen Keramik sind an die Betriebssicherheit überdies nur relativ geringe Anforderungen zu stellen.

Eine erfindungsgemäße Ausführungsform ist in Figur 3 dargestellt. Hier ist die in Figur 2 gezeigte Keramik 116 nunmehr dicker ausgebildet (vgl. Bezugszeichen 216). Überdies sind die Kühlkanäle 220 bei dieser Ausführungsform in besonders bevorzugter und erfinderischer Weise in die Keramik 216 selbst integriert. Dies kann beispielsweise durch ein Erosionsverfahren geschehen. Das Formwerkzeug lässt sich bereits durch entsprechendes Ausbilden der elektrisch leitfähigen Keramik 216 mit einer Kavitätsoberfläche 218 und den Durchflusskanälen 220 im Großen und Ganzen fertig stellen. Die Keramik 216 muss dann nur noch auf das entsprechende Halte- und Trägerelement 214 aufgebracht werden. Im Halte- und Trägerelement 214 können auch die entsprechenden Zu- und Ableitungen für die elektrische Versorgung der Keramik vorgesehen sein. Bei dieser Ausgestaltung können die Wärme und Kühlung sehr Oberflächen nah erzeugt werden, was zu besonders kurzen Reaktionszeiten und einer guten Effizienz sowohl beim Heizen wie auch beim Kühlen beiträgt. Vorliegend nicht näher dargestellt, kann die elektrisch leitende Keramik 216 als austauschbarer Einsatz ausgebildet sein, der auf das Halte- und Trägerelement 214 befestigbar aufgebracht werden kann. Dabei kann die elektrische Isolation an den Kontaktierungsstellen weggelassen werden, so dass beim Einsetzen der elektrisch leitenden Keramik 216 unmittelbar ein elektrischer Kontakt mit der elektrischen Zuführung aufgebaut ist. Zudem ist noch ein lösbarer Anschluss der Durchflusskanäle an das Gesamtkühlsystem erforderlich. In diesem Fall können dimensionsgleiche Einsätze schnell und mühelos ausgetauscht werden. Die Heiz- und Kühlleistung ist in der jeweiligen elektrisch leitenden Keramik entsprechend den Anforderungen wähl- und ausbildbar.

Eine analoge Ausgestaltung eines beheizbaren Werkzeugs ist auch für ein Extrusionswerkzeug (z.B. einen Rohrkopf) am ausgangsseitigen Ende eines Extruders möglich.

Insgesamt lässt sich mit der vorgeschlagenen Verwendung einer elektrisch leitfähigen Keramik - egal in welcher Alternative - eine schnelle Aufheizung der mit einer Schmelze in Kontakt kommenden Oberfläche eines Werkzeugs bei hoher Lebensdauer und Funktionssicherheit erreichen. Dazu tragen auch die hohen flächenbezogenen Heizleistungen bei wie die hohe Druckfestigkeit bei, so dass die Keramik entweder direkt unterhalb der Oberfläche oder unmittelbar zur Ausbildung der Oberfläche selbst eingesetzt werden kann. In Kombination mit einer unmittelbar integrierten Kühlung, dem Aufbringen einer Struktur auf eine direkt mit einer Schmelze in Kontakt tretenden Oberfläche der elektrisch leitenden Keramik, dem Vorsehen eines Keramikverbundes oder der Ausgestaltung der Keramik als austauschbares Werkzeugelement lassen sich besonders vorteilhafte Ausgestaltungen erreichen.

## Patentansprüche

1. Beheizbares Werkzeug für eine eine Kunststoffschmelze oder eine Metallschmelze verarbeitende Vorrichtung umfassend eine mit einer Schmelze in Kontakt kommende Oberfläche, wobei
- eine elektrisch leitende Keramik (16, 54, 116, 154, 216, 254) zum Heizen zumindest im Bereich der Oberfläche in diesem oder mit diesem integriert vorgesehen ist,
- ein Werkzeugträger mit einer Aufnahme versehen ist und die elektrisch leitende Keramik (16, 54, 116, 154, 216, 254) als Einsatz zum Einfügen in die Aufnahme des Werkzeugträger ausgebildet ist,
- die elektrisch leitende Keramik (16, 116, 216) zur Versorgung mit elektrischer Energie auf eine oder mehrere elektrisch leitfähige Oberflächen aufsetzbar ist,
**dadurch gekennzeichnet, dass**
- in der elektrisch leitenden Keramik (216) Kühlkanäle (220) zur Durchleitung eines Kühlmediums eingearbeitet sind und
- die elektrischen Zuführungen und die Kühlkanäle koppelbar ausgebildet sind, derart, dass eine Austauschbarkeit von Keramikeinsätzen für unterschiedliche Kavitäten gewährleistet ist.

2. Beheizbares Werkzeug nach Anspruch 1,
**dadurch gekennzeichnet,**
**dass** der Einsatz, insbesondere durch Oxidation, zumindest teilweise eine elektrische Isolierung aufweist, um ihn gegenüber anderen Bauteilen des beheizbaren Werkzeuges und/oder gegenüber der Schmelze elektrisch zu isolieren.

3. Beheizbares Werkzeug nach einem der vorhergehenden Ansprüche,
**dadurch gekennzeichnet,**
**dass** die elektrisch leitende Keramik (16) sandwichartig in einem Werkzeugelement (12, 14) eingebettet ist.

4. Beheizbares Werkzeug nach Anspruch 3,
**dadurch gekennzeichnet,**
**dass** die elektrisch leitende Keramik (16) nahe der oder unmittelbar unterhalb der Oberfläche (18), welche mit der Schmelze in Kontakt kommt, angeordnet ist.

5. Beheizbares Werkzeug nach Anspruch 1 oder 2,
**dadurch gekennzeichnet,**
**dass** auf die elektrisch leitende Keramik eine Nanostruktur aufgebracht ist.

6. Beheizbares Werkzeug nach Anspruch 5,
**dadurch gekennzeichnet,**
**dass** die Nanostruktur durch Abscheidung von Schichten hergestellt ist.

7. Beheizbares Werkzeug nach einem der Ansprüche 1 bis 6,
**dadurch gekennzeichnet,**
**dass** die elektrisch leitfähige Keramik auf der Basis einer Silizium-Nitrid-Verbindung gebildet ist, der die Leitfähigkeit erzeugende Stoffe beigemischt sind.

8. Beheizbares Werkzeug nach einem der vorhergehenden Ansprüche,
**dadurch gekennzeichnet,**
**dass** die Leitfähigkeit durch Zugabe einer Titan-Nitrid-Kombination zu einer Basisverbindung gegeben ist.

9. Beheizbares Werkzeug nach Anspruch 8,
**dadurch gekennzeichnet,**
**dass** die Zugabe sich in einem Volumen oder Gewichts-Bereich von 0 bis 50 % bewegt.

10. Beheizbares Werkzeug nach einem der vorhergehenden Ansprüche,
**dadurch gekennzeichnet,**
**dass** die elektrisch leitfähige Keramik eine Dicke von 0,5 mm bis 4 mm, insbesondere von 1 mm bis 3 mm aufweist.

11. Beheizbares Werkzeug nach einem der vorhergehenden Ansprüche,
**dadurch gekennzeichnet,**
**dass** das beheizbare Werkzeug als austauschbarer Werkzeugeinsatz ausgebildet ist.

12. Beheizbares Werkzeug nach einem der Ansprüche 1 bis 11,
**dadurch gekennzeichnet,**
**dass** die elektrisch leitende Keramik (16, 116, 216) mit Niederspannung und einem hohem Strom zur Erzielung einer hohen Heizleistung betreibbar ist.

13. Beheizbares Werkzeug nach einem der vorhergehenden Ansprüche,
**dadurch gekennzeichnet,**
**dass** zur Ansteuerung der elektrisch leitenden Keramik (16, 116, 216) ein Regelnetzteil vorgesehen ist.

14. Beheizbares Werkzeug nach einem der vorhergehenden Ansprüche,
**dadurch gekennzeichnet,**
**dass** die elektrisch leitfähige Keramik mittels einer stoffschlüssigen Verbindung mit einem übrigen Element des Werkzeugelements verbunden ist.

15. Beheizbares Werkzeug nach Anspruch 14,
**dadurch gekennzeichnet,**
**dass** die stoffschlüssige Verbindung durch Diffusionsschweißen hergestellt ist.

16. Beheizbares Werkzeug nach einem der vorhergehenden Ansprüche 1, 2 und 5 bis 15
**dadurch gekennzeichnet,**
**dass** die elektrisch leitende Keramik (116, 216) zumindest teilweise mit einer Oberfläche ausgebildet ist, die beim Betrieb der Vorrichtung direkt mit der Schmelze in Kontakt kommt.

17. Beheizbares Werkzeug nach Anspruch 16,
**dadurch gekennzeichnet,**
**dass** die leitende Keramik eine Kavitätsoberfläche (118, 218) oder einen Heißkanalabschnitt (152, 252) ausbildet.

18. Beheizbares Werkzeug nach einem der vorhergehenden Ansprüche,
**dadurch gekennzeichnet,**
**dass** als Keramikwerkstoff ein hoch abriebfester Werkstoff verwendet ist.

19. Beheizbares Werkzeug nach einem der vorhergehenden Ansprüche,
**dadurch gekennzeichnet,**
**dass** die Kühlkanäle (220) durch Erodierung in die elektrisch leitende Keramik (216) eingebracht sind.

20. Beheizbares Werkzeug nach einem der vorhergehenden Ansprüche,
**dadurch gekennzeichnet,**
**dass** die elektrisch leitende Keramik (16, 116, 216) auf einem Werkzeugstahl (14, 114, 214) angeordnet ist, der als Trägerelement dient.

21. Beheizbares Werkzeug nach einem der vorhergehenden Ansprüche,
**dadurch gekennzeichnet,**
**dass** die elektrisch leitende Keramik (16, 116, 216) von ihrer Form und/oder Oberfläche an die Geometrie der Kavitätsoberfläche (18, 118, 218) angepasst ist.

22. Beheizbares Werkzeug nach einem der vorhergehenden Ansprüche,
**dadurch gekennzeichnet,**
**dass** das Werkzeugelement mit einer Kavitätsoberfläche ausgebildet ist, die zumindest einen Teil einer Kavität abgrenzt.

23. Beheizbares Werkzeug nach einem der vorhergehenden Ansprüche 1 bis 22,
**dadurch gekennzeichnet,**
**dass** das Werkzeugelement eine Heißkanalvorrichtung aufweist.

24. Beheizbares Werkzeug nach einem der vorhergehenden Ansprüche 1 bis 22,
**dadurch gekennzeichnet,**
**dass** das Werkzeugelement als Werkzeug für eine Extrusionsvorrichtung ausgebildet ist.

## Claims

1. A heatable tool for a device processing a plastic melt or a metal melt, comprising a surface coming in contact with a melt, wherein
- an electrically conducting ceramic (16, 54, 116, 154, 216, 254) is provided for heating at least in the region of the surface in the latter or integrated therewith,
- a tool carrier is provided with a mounting and the electrically conducting ceramic (16, 54, 116, 154, 216, 254) is constructed as an insert for inserting into the mounting of the tool carrier,
- the electrically conducting ceramic (16, 116, 216)for supply with electrical energy is able to be placed onto one or more electrically conductive surfaces,
**characterized in that**
- cooling ducts (220) for passing a cooling medium through are worked in the electrically conducting ceramic (216) and
- the electrical feeds and the cooling ducts are constructed so as to be able to be coupled, such that an exchangeability of ceramic inserts for different cavities is guaranteed.

2. The heatable tool according to Claim 1,
**characterized in that**
the insert, particularly through oxidation, has at least partially an electrical insulation in order to insulate it electrically with respect to other components of the heatable tool and/or with respect to the melt.

3. The heatable tool according to any of the preceding claims,
**characterized in that**
the electrically conducting ceramic (16) is embedded in the manner of a sandwich in a tool element (12, 14).

4. The heatable tool according to Claim 3,
**characterized in that**
the electrically conducting ceramic (16) is arranged close to or immediately beneath the surface (18) which comes in contact with the melt.

5. The heatable tool according to Claim 1 or 2,
**characterized in that**
a nanostructure is applied onto the electrically conducting ceramic.

6. The heatable tool according to Claim 5,
**characterized in that**
the nanostructure is produced by deposition of layers.

7. The heatable tool according to any of Claims 1 to 6,
**characterized in that**
the electrically conductive ceramic is formed on the basis of a silicon-nitride composition to which substances producing conductivity are admixed.

8. The heatable tool according to any of the preceding claims,
**characterized in that**
the conductivity exists through the addition of a titanium-nitride combination to a base composition.

9. The heatable tool according to Claim 8,
**characterized in that**
the addition moves in a volume or weight range of 0 to 50 %.

10. The heatable tool according to any of the preceding claims,
**characterized in that**
the electrically conductive ceramic has a thickness of 0.5 mm to 4 mm, in particular of 1 mm to 3 mm.

11. The heatable tool according to any of the preceding claims,
**characterized in that**
the heatable tool is constructed as an exchangeable tool insert.

12. The heatable tool according to any of Claims 1 to 11,
**characterized in that**
the electrically conducting ceramic (16, 116, 216) is able to be operated with low voltage and with a high current to achieve a high heating capacity.

13. The heatable tool according to any of the preceding claims,
**characterized in that**
a control power supply is provided for operating the electrically conducting ceramic (16, 116, 216).

14. The heatable tool according to any of the preceding claims,
**characterized in that**
the electrically conductive ceramic is connected by means of a material connection with a further element of the tool element.

15. The heatable tool according to Claim 14,
**characterized in that**
the material connection is produced by diffusion welding.

16. The heatable tool according to any of the preceding claims 1, 2 and 5 to 15,
**characterized in that**
the electrically conducting ceramic (116, 216) is constructed at least partially with a surface which comes directly in contact with the melt during the operation of the device.

17. The heatable tool according to Claim 16,
**characterized in that**
the conducting ceramic forms a cavity surface (118, 218) or a heat duct section (152, 252).

18. The heatable tool according to any of the preceding claims,
**characterized in that**
a highly wear-resistant material is used as ceramic material.

19. The heatable tool according to any of the preceding claims,
**characterized in that**
the cooling ducts (220) are introduced into the electrically conducting ceramic (216) by eroding.

20. The heatable tool according to any of the preceding claims,
**characterized in that**
the electrically conducting ceramic (16, 116, 216) is arranged on a tool steel (14, 114, 214) which serves as carrier element.

21. The heatable tool according to any of the preceding claims,
**characterized in that**
the electrically conducting ceramic (16, 116, 216) is adapted by its shape and/or surface to the geometry of the cavity surface (18, 118, 218).

22. The heatable tool according to any of the preceding claims,
**characterized in that**
the tool element is constructed with a cavity surface which delimits at least a part of a cavity.

23. The heatable tool according to any of the preceding Claims 1 to 22,
**characterized in that**
the tool element has a heat duct device.

24. The heatable tool according to any of the preceding Claims 1 to 22,
**characterized in that**
the tool element is constructed as a tool for an extrusion device.

## Revendications

1. Outil susceptible d'être chauffé, pour un dispositif de mise en oeuvre d'une masse en fusion de matière plastique ou d'une masse métallique en fusion, comprenant une surface entrant en contact avec une masse en fusion,
- une céramique conductrice d'électricité (16, 54, 116, 154, 216, 254) pour chauffer au moins dans la région de la surface étant prévue, intégrée dans ce dernier ou avec ce dernier
- un porte-outil étant muni d'un logement et la céramique conductrice d'électricité (16, 54, 116, 154, 216, 254) étant réalisée sous la forme d'un insert à emboîter dans le logement du porte-outil,
- pour l'alimentation en énergie électrique, la céramique conductrice d'électricité (16, 116, 216) étant susceptible de se poser sur une ou sur plusieurs surfaces conductrices d'électricité,
**caractérisé en ce que**
- dans la céramique conductrice d'électricité (216) sont incorporés des conduits de refroidissement (220) pour faire circuler un agent de refroidissement et
- les alimentations électriques et les conduits de refroidissement sont réalisés en version susceptible d'être couplée, de sorte à assurer une interchangeabilité d'inserts en céramique pour différentes cavités.

2. Outil susceptible d'être chauffé selon la revendication 1,
**caractérisé en ce que,**
l'insert, notamment par oxydation comporte au moins en partie une isolation électrique, pour l'isoler électriquement par rapport à d'autres éléments constitutifs de l'outil susceptible d'être chauffé et/ou par rapport à la masse en fusion.

3. Outil susceptible d'être chauffé selon l'une quelconque des revendications précédentes,
**caractérisé en ce que,**
la céramique conductrice d'électricité (16) est noyée à la manière d'un sandwich dans un élément de l'outil (12, 14).

4. Outil susceptible d'être chauffé selon la revendication 3,
**caractérisé en ce que**
la céramique conductrice d'électricité (16) est disposée à proximité ou directement sous la surface (18) qui entre en contact avec la masse en fusion.

5. Outil susceptible d'être chauffé selon la revendication 1 ou 2,
**caractérisé en ce que,**
une nanostructure est appliquée sur la céramique conductrice d'électricité.

6. Outil susceptible d'être chauffé selon la revendication 5,
**caractérisé en ce que,**
la nanostructure est fabriquée par séparation de couches.

7. Outil susceptible d'être chauffé selon l'une quelconque des revendications précédentes 1 à 6,
**caractérisé en ce que,**
la céramique conductrice d'électricité est formée sur la base d'un composé nitrure/silicium, auquel sont mélangées les matières créant la conductibilité.

8. Outil susceptible d'être chauffé l'une quelconque des revendications précédentes,
**caractérisé en ce que,**
la conductibilité est donnée par ajout d'une combinaison nitrure/titane à un composé de base.

9. Outil susceptible d'être chauffé selon la revendication 8,
**caractérisé en ce que,**
l'ajout se situe dans un taux de volume ou de poids de 0 à 50 %.

10. Outil susceptible d'être chauffé selon l'une quelconque des revendications précédentes,
**caractérisé en ce que,**
la céramique conductrice d'électricité présente une épaisseur de 0,5 mm à 4 mm, notamment de 1 mm à 3 mm.

11. Outil susceptible d'être chauffé selon l'une quelconque des revendications précédentes,
**caractérisé en ce que,**
l'outil susceptible d'être chauffé est réalisé sous la forme d'un insert d'outil interchangeable.

12. Outil susceptible d'être chauffé selon l'une quelconque des revendications précédentes 1 à 11,
**caractérisé en ce que,**
la céramique conductrice d'électricité (16, 116, 216) peut fonctionner à basse tension et avec un courant fort, pour obtenir une grande puissance de chauffe.

13. Outil susceptible d'être chauffé selon l'une quelconque des revendications précédentes,
**caractérisé en ce que,**
un bloc d'alimentation de réglage est prévu pour activer la céramique conductrice d'électricité (16, 116, 216).

14. Outil susceptible d'être chauffé selon l'une quelconque des revendications précédentes,
**caractérisé en ce que,**
la céramique conductrice d'électricité est reliée au moyen d'une liaison de matière avec un autre élément de l'élément d'outil.

15. Outil susceptible d'être chauffé selon la revendication 14,
**caractérisé en ce que,**
la liaison de matière est établie par diffusion.

16. Outil susceptible d'être chauffé selon l'une quelconque des revendications précédentes 1 à 2, et 5 à 15,
**caractérisé en ce que,**
la céramique conductrice d'électricité (116, 216) est réalisée au moins en partie avec une surface, qui lors du fonctionnement du dispositif entre en contact direct avec la masse en fusion.

17. Outil susceptible d'être chauffé selon la revendication 16,
**caractérisé en ce que,**
la céramique conductrice d'électricité forme une surface de cavité (118, 218) ou un tronçon de conduit chauffant (152, 252).

18. Outil susceptible d'être chauffé selon l'une quelconque des revendications précédentes,
**caractérisé en ce qu'**
il est utilisé en tant que matière céramique un matériau à haute résistance à l'usure.

19. Outil susceptible d'être chauffé selon l'une quelconque des revendications précédentes,
**caractérisé en ce que**
les conduits de refroidissement (220) sont ménagés dans la céramique conductrice d'électricité (16) par érosion.

20. Outil susceptible d'être chauffé selon l'une quelconque des revendications précédentes,
**caractérisé en ce que**
la céramique conductrice d'électricité (16, 116, 216) est disposée sur un acier à outils (14, 114, 214) qui sert d'élément porteur.

21. Outil susceptible d'être chauffé selon l'une quelconque des revendications précédentes,
**caractérisé en ce que**
la céramique conductrice d'électricité (16, 116, 216) est adaptée par sa forme et/ou par sa surface à la géométrie de la surface de la cavité (18, 118, 218).

22. Outil susceptible d'être chauffé selon l'une quelconque des revendications précédentes,
**caractérisé en ce que**
l'élément d'outil est réalisé avec une surface de cavité qui délimite au moins une partie d'une cavité.

23. Outil susceptible d'être chauffé selon l'une quelconque des revendications précédentes 1 à 22,
**caractérisé en ce que**
l'élément d'outil comporte un dispositif à conduit chaud.

24. Outil susceptible d'être chauffé selon l'une quelconque des revendications précédentes 1 à 22,
**caractérisé en ce que**
l'élément d'outil est réalisé sous la forme d'un outil pour un dispositif d'extrusion.
